# EUROPEAN PATENT SPECIFICATION

(11) **EP 4 508 350 B1**
(45) Date of publication and mention of the grant of the patent: **01.04.2026**
(21) Application number: 23719751.2
(22) Date of filing: 14.04.2023
(51) Int. Cl.: F16L 1/036, F16L 59/14, F16L 58/02, F16L 9/12, B32B 1/00, B32B 3/26, B32B 5/02, B32B 5/18, B32B 15/18, B32B 27/06, B32B 27/12, B32B 27/32, B32B 1/08

(54) **DISTRICT HEATING PIPES FOR TRENCHLESS INSTALLATION**
FERNWÄRMEROHRE FÜR GRABENLOSE INSTALLATION
TUYAUX DE CHAUFFAGE URBAIN POUR UNE INSTALLATION SANS TRANCHÉE

(30) Priority: 14.04.2022 DE 202022102049 U
(43) Date of publication of application: 19.02.2025
(73) Proprietor: TDC International AG, 6004 Luzern (CH)
(72) Inventor: WELKER, Daniel, 6004 Luzern (CH)
(74) Representative: Eisenführ Speiser
(86) International application number: PCT/EP2023/059809
(87) International publication number: WO 2023/198902

(56) References cited:
- EP-A1- 1 310 718
- GB-A- 1 306 831
- US-B1- 9 303 807

## Description

The invention relates to insulated pipes, in particular insulated steel pipes with GRP sheathing for district heating pipes.

District heating pipes are used to transport a liquid heat transfer medium - usually water - to heat consumers. For example, it is known to transport heat from block-type thermal power stations via district heating pipes to industrial or residential consumers. In order to keep the loss of heat energy as low as possible during transport, i.e. while the heat transfer medium is flowing through the district heating pipe, district heating pipes are insulated. For this purpose, thermal insulation made of a polymer foam or other insulation materials is typically applied to the outside of a central tube. A district heating pipe is therefore typically composed of a central tube carrying the heat transfer medium and a jacket layer applied to the outside of the central tube. This jacket layer typically comprises an anti corrosion layer (i.e. a corrosion protection layer) for the central tube that shall protect the central tube from corrosion and electrolyte penetration. The central tube typically is a steel pipe.

Between the central tube and an outer jacket layer a thermal insulation layer made of polymer foam or other insulation materials is provided. The polymer foam or other insulation materials typically comprise polyurethane or is a polyurethane foam. On the outside, the thermal insulation layer is covered with a protective jacket layer, which can be a polyethylene (PE) jacket pipe, for example. The central tube for the heat transfer medium has an internal diameter in the order of 700 mm, i.e. between 100 mm and 1600 mm, for example. GB 1 306 831 A discloses a connection for pipes which are provided with an external foam plastics layer carrying an outer covering layer.

From US 9,303,807 B1 a pipe installation transition fitting is known which includes a transition fitting housing having a housing interior, a fitting attachment mechanism carried by the transition fitting housing and a pressurization port carried by the transition fitting housing and having a pressurization port opening communicating with the housing interior of the transition fitting housing.

EP 1 310 718 A1 describes a method for producing corrosion resistant pipe connections, for pipes with a mantle, comprises spraying a plastic coating onto the mantled pipe ends. The invention addresses the problem to allow an economical installation of the insulated pipe for heat transfer between a heat source and a heat consumer.

According to the invention, a district heating pipe is proposed, which has a central metal tube, in particular a steel tube for carrying a heat transfer medium, a thermal insulation layer made of a polymer foam or other insulation materials, in particular polyurethane foam, and a jacket layer, in particular a jacket pipe made of polyethylene (PE), which protects the thermal insulation layer from mechanical and electrolyte damage. The district heating pipe has a distal end that is the front end when the district heating pipe is trenchlessly installed. According to the invention, the district heating pipe is designed to be suitable for trenchless installation and, for this purpose, has an outer casing layer made of glass fibre-reinforced plastic. At the distal end a force transmitting metal structure is fixed, for instance welded to the central metal tube and attached to the outer casing layer. The force transmitting structure has an outer diameter that matches or exceeds an outer diameter of the outer casing layer. The force transmitting structure is designed to transfer forces acting on the distal end of the district heating pipe in a longitudinal direction of the district heating pipe to the central metal tube and the outer casing layer, thus avoiding shear forces on the thermal insulation layer made of a polymer foam or other insulation materials that is arranged radially between the central metal tube and the outer casing layer.

For district heating pipe to be pulled during trenchless installation, the force transmitting structure can be a pulling head made of metal, in particular steel, which is sheathed with glass fibre-reinforced plastic. The pulling head itself is directly connected to both the central service pipe and the outer casing layer in such a way that pulling forces are introduced into both the central metallic pipe and the outer casing layer.

For district heating pipe to be pushed (thrusted) during trenchless installation, the force transmitting structure comprises a metallic protection shield radially extending between the central metallic tube and the outer casing layer. The metallic protection shield is fixed to the central metal tube and attached to the outer casing layer. Preferably gussets are provided that extend between a distal surface of the metallic protection shield and an outer surface of the central metal tube and that are welded to both, the metallic protection shield and the central metal tube.

Preferably, the outer casing layer has a layer thickness of at least 5 mm, preferably at least 10 mm, in order to provide sufficient mechanical protection and, above all, to be able to absorb and transmit the tensile and compressive forces that occur, so that the thermal insulation layer is exposed to as few shear forces as possible during installation when tensile and compressive forces are introduced into the pulling head. The outer casing layer is dimensioned to absorb radial forces during thrusting the district heating pipe during trenchless installation.

Preferably, the pulling head is welded to the central metal tube and the sheathing of the pulling head made of fibre-reinforced plastic is bonded to the outer casing layer of the district heating pipe.

Alternatively, the protection shield is welded to the central metal tube and bonded to the outer casing layer.

The central metal tube preferably has an internal diameter between 100 mm and 1600 mm.

Another aspect of the invention relates to a district heating pipe composed of a plurality of district heating pipes, each of said district heating pipes having
- a central metal tube for carrying a heat transfer medium,
- a corrosion protection layer around the central metal tube,
- a thermal insulation layer made of a polymer foam or other insulation materials, and
- a jacket layer protecting the thermal insulation layer from mechanical and electrolyte damages.

The central metal tubes (steel pipes) are welded together at their end faces in such a way that the welded junction between two central metal tubes can transmit tensile forces and is tight with respect to the heat transfer medium.

The district heating pipes have an outer casing layer made of glass fibre-reinforced plastic, whereby the outer casing layers of interconnected district heating pipes are joined together by means of glass fibre-reinforced plastic in such a way that tensile forces of preferably at least 5 MN (Mega-Newtons) can be transmitted from one district heating pipe to the next district heating pipe via the junction of the casing layers. The outer casing layer is applied on the protective jacket layer. In case the protective jacket layer is a jacket tube made of polyethylene, the casing layer id applied on the outer surface of the jacket tube. Preferably, one end of the district heating pipe has a pulling head made of metal, in particular steel, which is sheathed in glass-fibre reinforced plastic. The pulling head itself is directly connected to both the central metal tube and the outer casing layer in such a way that pulling forces are introduced into both the central metal tube and the outer casing layer. Preferably, the outer casing layers of interconnected district heating pipes are scarf joined
- i.e. connected to each other by a scarf joint - in the area of the junction over a length of at least 80 mm each, for instance between 50 mm and 1000 mm.

According to a further aspect of the invention, a method of installing a district heating pipe is provided. The method comprises the steps of
- Providing a first district heating pipe that comprises a force transmitting structure
- Providing further district heating pipe sections without force transmit-ting structure,
wherein each district heating pipe section comprises a central metal tube, an optional corrosion protection layer, a thermal insulation layer, a jacket layer and an outer casing layer.

The method further comprises
- Joining the faces of the central metal tubes by welding,
- (optional Application of a corrosion protection layer),
- Restoring the thermal insulation layer,
- Restoring the jacket layer and
- Joining the outer casing layers, for instance by way of sleeving or scarf joining

The invention will now be explained in more detail by means of examples with reference to the figures. From the figures shows:
- Fig. 1:: A first embodiment of a front section of a district heating pipe according to the invention in schematic representation;
- Fig. 2:: A second embodiment of a front section of a district heating pipe according to the invention in schematic representation;
- Fig. 3:: A detail of a scarf joint between the outer casing layers of two interconnected district heating pipes.

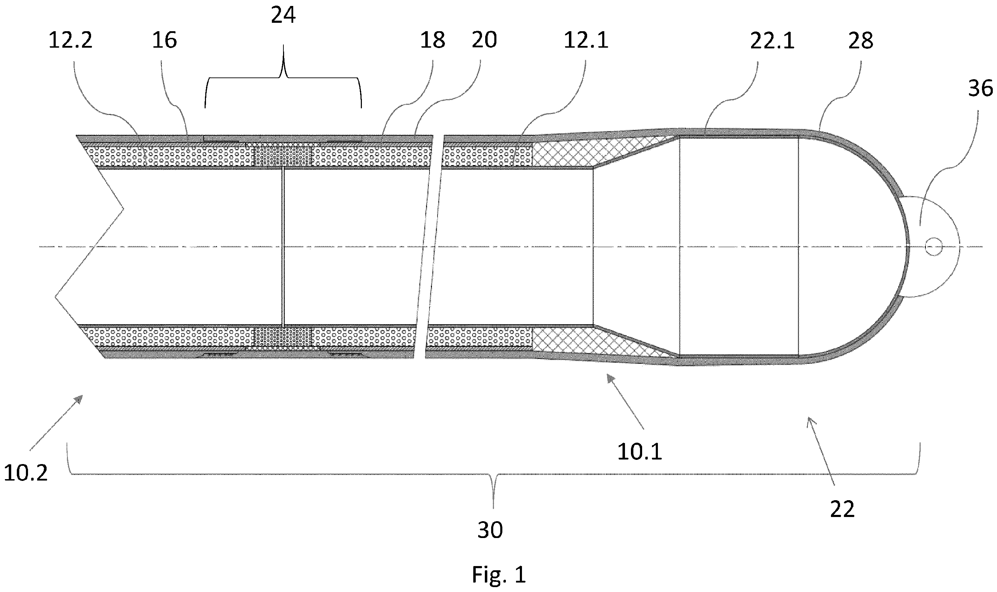

Figure 1 shows a district heating pipe according to the invention. Like conventional district heating pipes, this has a central metal tube 12.1 and 12.2, which may be provided with an optional corrosion protection layer (not shown) on the outside. The central metal tube 12.1 and 12.2 - and, if provided, the corrosion protection layer - is surrounded by a thermal insulation layer 16, which in the example case is formed by polymer foam, namely polyurethane foam. The thermal insulation layer 16 is in turn surrounded by a jacket pipe 18, which in the example case is made of polyethylene. In this respect, the structure of the district heating pipe 10.1 and 10.2 corresponds to what is usual for district heating pipes.

In addition, the district heating pipe 10.1 and 10.2 has a casing layer 20 of fibre-reinforced plastic on the outside of the jacket pipe 18. The sheath layer 20 has a fibre matrix formed by glass fibres, which is embedded in a synthetic resin matrix, in particular an epoxy resin, a polyester resin or a vinyl ester matrix.

The sheathing layer made of glass fibre-reinforced plastic has two functions:
On the one hand, it is intended to protect the district heating pipe 10 from external damage and, on the other hand, it is intended to transmit tensile forces occurring during trenchless installation.

To introduce the traction forces into the district heating pipe 30, a pulling head 22.1 made of steel is provided, which is directly connected to the first central metal tube 12.1. The pulling head 22.1 is wrapped in the factory or on site with individual layers of glass fibre reinforced plastic (GRP) and thus has a GRP sheathing 28. For the GRP sheathing 28 of the pulling head 22.1, individual layers are preferably applied to the steel sheathing surface in the form of glass fibre mats, glass fibre fabrics or a combination thereof in a wet-on-wet process using a vinyl ester, polyester or epoxy resin. In this process, the individual laminate layers are preferably cross-wound, i.e. the glass fibres are applied with a first winding sense and a second (glass) layer with a winding sense opposite to this winding sense, preferably with an overlap of 50%, until the desired coating thickness is achieved. In this way, forces are introduced directly from the pulling head 22.1 both into the central metal tube 12.1 and into the casing layer 20 made of fibre-reinforced plastic, thus preventing shear forces from acting on the thermal insulation layer 16 during trenchless installation - i.e. when pulling forces are introduced into the district heating pipe 30 via the pulling head 22.1.

A district heating pipe section with a pulling head is uses for pulling the district heating pipe during trenchless installation.

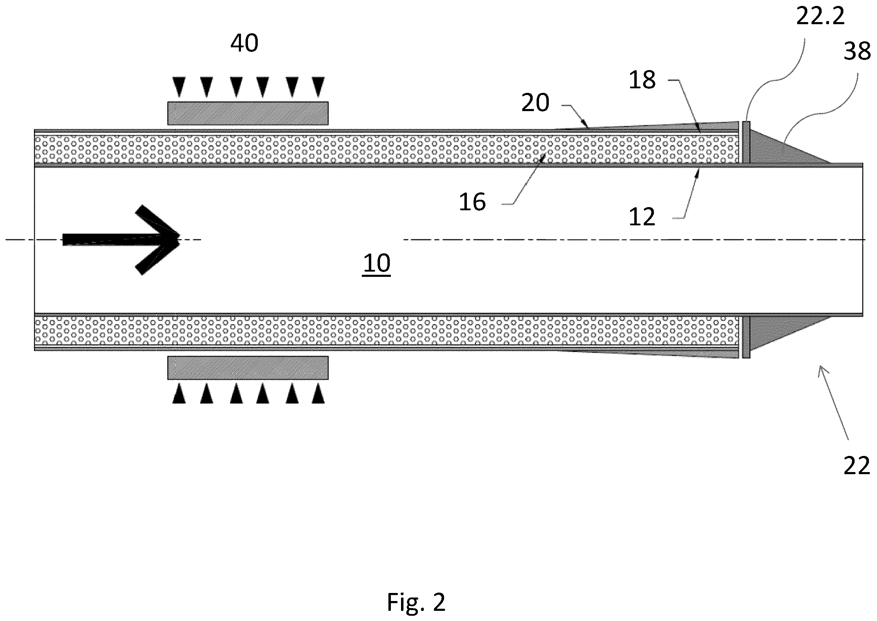

Alternatively, the district heating pipe can be pushed or thrusted during trenchless installation. For thrusting a district heating pipe, the first, most distal front section 10 of the district heating pipe is provided with a force transmitting structure 22 that comprises a metallic protection shield 22.2; see figure 2.

The metallic protection shield 22.2 radially extends between the central metallic tube 12 and the outer casing layer 20. The metallic protection shield 22.2 is fixed to the central metal tube 12 and attached to the outer casing layer 20. Preferably gussets 38 are provided that extend between a distal surface of the metallic protection shield 22.2 and an outer surface of the central metal tube 12. The gussets 38 are welded to both, the metallic protection shield 22.2 and the central metal tube 12. Where the outer casing layer 20 is attached to the metallic protection shield, the outer casing layer may have an increased thickness as shown in figure 2.

For thrusting district heating pipe, a thruster (thrusting machine) is used. Thrust pads 40 grab the district heating pipe and exert a radial clamping force on the outer casing layer 20. For instance, the radial clamping force can amount up to 17 MN and typically exceeds 3 MN. Thus an axial push force between 600 kN and 1,5 MN can be achieved.

During thrusting, the outer casing layer 20 must withstand the radial clamping force. Further, the outer casing layer 20 transmits the axial force towards the distal end of the district heating pipe and the metallic protection shield 38. The metallic protection shield 38 thus pushes the central metal tube 12 and the outer casing layer 20 and the central metal tube 12 move forward together. Thus, no or little shearing and radial forces are acting on the insulation layer 16 while the district heating pipe is thrusted during trenchless installation.

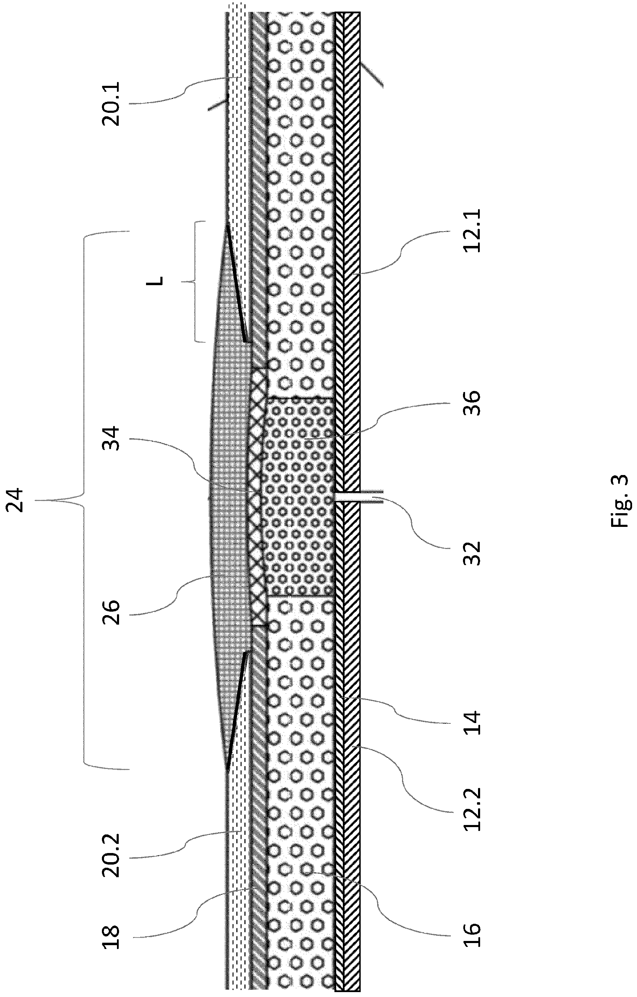

Since a complete district heating pipe 30 is typically composed of several district heating pipes sections 10, which are each connected to each other at their longitudinal ends, the tensile and/or compressive forces must also be transferred across the corresponding connection points from one district heating pipe section 10.1 to the next district heating pipe section 10.2. The connection of the central metal tubes 12.1 and 12.2 is made in the usual manner, for instance by welding the central metal tubes 12.1 and 12.2 together at their end faces. The weld 32 also ensures that the district heating pipe is tight, i.e. that no heat transfer medium can escape from the district heating pipe at the junctions between the district heating pipe sections 10.1 and 10.2. At the junction 24, an optional corrosion protection layer and the thermal insulation layer 16 are applied in the usual manner, so that no gap occurs in the corrosion protection layer and in the thermal insulation layer 16 where the sections 10.1 and 10.2 of the district heating pipe 30 are connected; see figure 3.

The gap in the jacket layer 18 is also closed in a manner known per se.

One way to restore the thermal insulation layer 16 and the jacket layer 18 in the area of the junction 24, or to close the gap that initially exists, is to first place a sleeve 34 with the diameter of the jacket pipe 18 around the junction, so that a cavity remains between the sleeve 34 and the restored corrosion protection layer, which can then be filled with polyurethane foam 36.

Finally, the casing layers 20.1 and 20.2 of the interconnected district heating pipe sections 10.1 and 10.2 are joined together by means of a laminate 26 of fibre-reinforced plastic in such a way that the newly applied fibre-reinforced plastic bonds directly to the fibres of the casing layers 20.1 and 20.2. For this purpose, these fibres are first prepared and exposed in the area of the junction, as is known, for example, by tapering and scarf joining the ends of casing layers 20.1 and 20.2. This ensures that the casing layers 20.1 and 20.2 can also transmit the tensile forces occurring during trenchless installation across the junction 24. The same applies to the central metal tubes 12.1 and 12.2, which are connected to each other with corresponding tensile strength by their welding.

The tapered or sleeved length L over which the respective sheath layer 20 of fibre-reinforced plastic is tapered or sleeved in the region of the junction 24 depends on the tensile forces to be transmitted and is, for example, between 4 and 30 cm on both sides of the junction, but preferably at least 10 to 28 cm in each case.

In order for the casing layer 20 to be able to transmit the tensile forces occurring during trenchless installation in the case of a district heating pipe with a central metal tube with an internal diameter of 700 mm, the casing layer 20 is preferably constructed as follows:
The thickness of the casing layer 20 can be varied depending on the tensile forces to be transmitted, but is usually between 5 mm and 24 mm. It has a textile fibre content of at least 50% by volume, preferably at least 60%.

The casing layer 20 is composed of several layers of glass fibre reinforced plastic (GRP), whereby the individual layers can be formed in the form of rovings, UD fabrics, glass fibre mats, glass fibre fabrics or a combination of these and are applied to the thermoplastic cladding surface in a wet-on-wet process using a vinyl ester, polyester or epoxy resin, preferably in a machine winding process. At least the outer two individual laminate layers of the outer casing layer 20 are preferably cross-wound, i.e. the glass fibres and the synthetic resin matrix are applied with a first winding direction and a second (glass) layer is applied with a winding direction opposite to this winding direction. The advantage of cross-winding is that the media tube 12 can be installed in any axial direction.

Preferably, the casing layer 20 has an approximately continuously decreasing layer thickness at the longitudinal ends of each of the district heating pipe sections 10 prior to being joined to form a district heating pipe 30. Preferably, the casing layer 20 tapers over a length of approximately between 100 mm and half a meter, in order to avoid or limit thickening as far as possible during the sheathing of the casing layer 20 in the respective junction area. This length of decreasing thickness is also provided with a peel ply on its outer side prior to scarf joining. This contributes to the fact that the longitudinal ends of the pipes do not have to be ground before scarf joining after welding the end faces of the district heating pipes 10.

Where the pulling head 22.1 attaches to the most distal district heating pipe section 10, the central metal tube 12 is initially exposed so that the synthetic resin, which forms the matrix for the pulling head 22.1 consisting of glass fibre-reinforced plastic, can be applied directly to the central metal tube. This allows tensile forces from the pulling head 22.1 to be applied directly to the central media tube 10. In addition, the fibres of the pulling head 22.1 are also connected to the fibres of the casing layer 20 in order to be able to introduce tensile forces directly into the casing layer 20.

Preferably, the pulling head 22.1 can be produced in one step - i.e. wet in wet - with the fibers forming the casing layer 20 being placed in the area of the pulling head 22.1 in such a way that they connect directly to the central metal tube 12 via the synthetic resin matrix.

The district heating pipe sections 10 are typically only joined to each other at the point of trenchless installation. For a longer district heating pipe 30, a large number of district heating pipe sections 10 are therefore joined to each other, but only the most distal one of them needs to have a pulling head 22.1.

In order to progressively pull the district heating pipe 30 forward, a pulling hug 36 is provided on the pulling head 22.1, which is welded to the pulling head 22.1 and has a pulling eye.

When installing the district heating pipe 30, one district heating pipe section 10 after the other can be connected to the rest of the district heating pipe 30 and the district heating pipe 30 can be pulled forward piece by piece by the length of one district heating pipe section 10. Subsequently, another district heating pipe sections 10 can be joined to the district heating pipe 30. The joining includes the steps of welding the central metal tubes 12, optionally applying the corrosion protection layer, restoring the thermal insulation layer 16, adding the jacket layer 18 (jacket pipe 18) and scarf joining the casing layer 20, as described above.

The result is an installation method in which first a first district heating pipe section 10.1 is provided with a force transmitting structure 22, in particular a pulling head 22.1 of the type described above. In addition, a second district heating pipe section 10.2 and further district heating pipe sections 10.n are provided, the total length of the joined district heating pipe sections 10.n corresponds to the desired district heating pipe 30.

The second district heating pipe section 10.2 is connected to the first district heating pipe section 10.1 that is provided with the force transmitting structure 22, in the manner described. Subsequently, the composite of the interconnected district heating pipes 10.1 and 10.2 is pulled or pushed forward by approximately the length of the district heating pipe 10.2 by means of pulling head 22.1 of the first district heating pipe 10.1 or by means of thrust pads 40 of a pipe thrusting machine (not shown). A third district heating pipe section can then be connected to the end of the second district heating pipe section 10.2 in a manner as described and the composed first part of the district heating pipe 30 can again be pulled or thrusted forward by the length of the third district heating pipe section. These steps are repeated until all district heating pipe sections 10.n are connected to form a complete district heating pipe 30 composed of joined heating pipe sections 10. The steps of joining two district heating pipes at their open ends and the subsequent axial advancement of the composite of district heating pipe sections thus alternate.

As already mentioned, each joining of the district heating pipe sections comprises the steps of:
- Welding the faces of the central metal tubes 12,
- (optional Application of a corrosion protection layer),
- Restoring the thermal insulation layer 16,
- Restoring the jacket layer 18 and
- Scarf joining the casing layers 20.

The advantage of this method is that the district heating pipe can be installed without digging an open trench, so that above-ground infrastructure, for example, is not affected. Thus, a district heating pipe can be pushed or pulled under roadways, buildings or the like.

The forces required to push (thrust) and/or pull the district heating pipe forward are advantageously introduced into the sections 10 of the district heating pipe 30 created by connecting individual district heating pipe sections 10 by means of the force transmitting structure in such a way that no shear forces act on the insulation layer 16. The casing layer 20 thus has a dual function, namely on the one hand the function of protecting the jacket layer 18 and the thermal insulation layer 16 from mechanical and/or electrolytic damage and on the other hand of transmitting tensile forces between the interconnected district heating pipe sections 10 - and preferably to the same extent as the tensile forces are also transmitted by the interwelded central metal tubes 12.

### List of reference signs

- 10: District heating pipe section
- 10.1, 10.2, 10.n: District heating pipe section
- 12: Central metal tube
- 12.1, 12.2: Central metal tube
- 16: Thermal insulation layer
- 18: Jacket layer, jacket pipe
- 20: Casing layer
- 20.1, 20.2: Casing layer
- 22: Force transmitting structure
- 22.1: Pulling head
- 22.2: Metallic protection shield
- 24: Junction
- 26: Laminate
- 28: GRP sheathing of the pulling head
- 30: District heating pipeline
- 32: Weld seam
- 34: Cuff
- 36: Pull hug
- 38: Gusset
- 40: Thrusting pads
- L: Scarf joint length

## Claims

1. District heating pipe section (10) with
- a central metal tube (12) for carrying a heat transfer medium,
- a thermal insulation layer (16) made of a polymer foam or other insulation materials. and
- a jacket layer (18) protecting the thermal insulation layer from mechanical damage,
the district heating pipe section (10) having a distal end that is the front end when the district heating pipe is trenchlessly installed
**characterized in that** the district heating pipe section has an
- outer casing layer (20) made of glass fibre-reinforced plastic and
- a force transmitting metal structure (22) that is fixed to the distal end of the central metal tube
the force transmitting structure (22) having an outer diameter that matches or exceeds an outer diameter of the outer casing layer (20) and
the force transmitting structure (22) being designed to transfer forces acting on the distal end of the district heating pipe section (10) in a longitudinal direction of the district heating pipe section (10) to the central metal tube (12) and the outer casing layer (20), thus avoiding compressive and shear forces on the thermal insulation layer (16) that is arranged radially between the central metal tube (12) and the outer casing layer (20).

2. District heating pipe section according to claim 1, **characterized in that** the force transmitting structure is a pulling head (22.1) which consists of steel and is sheathed with fibre-reinforced plastic and is directly connected both to the central metal tube (12) and to the outer casing layer (20) in such a way that pulling forces are introduced via the pulling head (22.1) both into the central metal tube (12) and into the outer casing layer (20).

3. District heating pipe section according to claim 2, **characterized in that** the pulling head (22.1) is welded to the central metal tube (12) and the sheathing of the pulling head made of fibre-reinforced plastic is materially bonded to the outer sheathing layer (20) of the district heating pipe (10).

4. District heating pipe section according to claim 1, **characterized in that** the force transmitting structure (22) comprises metallic protection shield (22.2) radially extending between the central metallic tube (12) and the outer casing layer (20), the metallic protection shield (22.2) being fixed to the central metal tube (12) and being attached to the outer casing layer (20).

5. District heating pipe section according to claim 4, **characterized in that** gussets (38) are provided that extend between a distal surface of the metallic protection shield (22.2) and an outer surface of the central metal tube (12) and that are welded to both, the metallic protection shield (22.2) and the central metal tube (12).

6. District heating pipe section according to at least one of claims 1 to 5, **characterized in that** the casing layer (20) has a layer thickness of at least 5 mm, preferably at least 12 mm.

7. District heating pipe section according to at least one of claims 1 to 6, **characterized in that** the central metal tube (12) has an inner diameter between 100 mm and 2000 mm.

8. District heating pipe (30) composed of a plurality of district heating pipe sections, each of the district heating pipe sections (10.1, 10.2) comprising
- a central metal tube (12) for conducting a heat transfer medium,
- a thermal insulation layer (16) of a polymer foam, and
- a jacket layer (18) protecting the thermal insulation layer from mechanical damage
wherein the central metal tubes (12) are welded together at their end faces in such a way that the welded junction between two central metal tubes (12) can transmit tensile and compressive forces and is tight with respect to the heat transfer medium,
**characterized in that** the district heating pipe sections (10.1, 10.2) have an outer casing layer (20) of fibre-reinforced plastic, the outer casing layers (20) of interconnected district heating pipe sections (10) being connected to one another by means of glass fibre-reinforced plastic in such a way that tensile forces can be transmitted from one district heating pipe section (10.1) to the next heating pipe section (10.2) via the junction of the casing layers (20).

9. District heating pipe according to claim 8, **characterized in that** the outer casing layers (20) of interconnected district heating pipe sections (10) are connected to one another by means of glass fibre-reinforced plastic in such a way that tensile forces of at least 5 MN (Mega-Newton) can be transmitted from one district heating pipe section (10.1) to the next heating pipe section (10.2) via the junction of the casing layers (20).

10. District heating pipe according to claim 8 or 9, **characterized in that** it comprises at one end a district heating pipe section according to any one of claims 1 to 7.

11. District heating pipe according to at least one of claims 8 to 10, **characterized in that** the outer casing layers (20) of interconnected district heating pipe sections (10) are each scarf joined over a length of between 50 mm and 1000 mm in the region of the connection.

12. Method of trenchless installation of a district heating pipe, the method comprising the steps of:
- Providing a first district heating pipe section (10) according to at least one of claims 1 to 7, said first district heating pipe section comprising a force transmitting structure (22)
- Providing further district heating pipe sections (10.2, 10.n) without force transmitting structure,
- each district heating pipe section (10) comprising a central metal tube (12), a thermal insulation layer (16), a jacket layer (18) and an outer casing layer (20),
- Joining the faces of the central metal tubes (12) by welding,
- Restoring the thermal insulation layer (16),
- Restoring the jacket layer (18) and
- Joining the outer casing layers (20).

## Patentansprüche

1. Fernwärmeleitungsabschnitt (10) mit
- einem zentralen Metallrohr (12) zum Transport eines Wärmeübertragungsmediums,
- einer Wärmedämmschicht (16) aus einem Polymerschaum oder anderen Dämmstoffen und
- eine Mantelschicht (18) zum Schutz der Wärmedämmschicht vor mechanischer Beschädigung,
wobei der Fernwärmeleitungsabschnitt (10) ein distales Ende aufweist, das bei einer grabenlosen Verlegung der Fernwärmeleitung das vordere Ende bildet
**dadurch gekennzeichnet, dass** der Fernwärmeleitungsabschnitt
- eine äußere Ummantelungsschicht (20) aus glasfaserverstärktem Kunststoff und
- eine kraftübertragende Metallstruktur (22), die am distalen Ende des zentralen Metallrohrs befestigt ist,
aufweist,
wobei die kraftübertragende Struktur (22) einen Außendurchmesser aufweist, der dem Außendurchmesser der äußeren Ummantelungsschicht (20) entspricht oder diesen übersteigt, und
wobei die kraftübertragende Struktur (22) so ausgelegt ist, dass sie Kräfte, die auf das distale Ende des Fernwärmeleitungsabschnitts (10) in Längsrichtung des Fernwärmeleitungsabschnitts (10) wirken, auf das zentrale Metallrohr (12) und die äußere Ummantelungsschicht (20) überträgt, wodurch Druck- und Scherkräfte auf die Wärmeisolationsschicht (16), die radial zwischen dem zentralen Metallrohr (12) und der äußeren Ummantelungsschicht (20) angeordnet ist, vermieden werden.

2. Fernwärmeleitungsabschnitt nach Anspruch 1, **dadurch gekennzeichnet, dass** die Kraftübertragungsstruktur ein Zugkopf (22.1) aus Stahl ist, der mit faserverstärktem Kunststoff ummantelt ist und sowohl mit dem zentralen Metallrohr (12) als auch mit der äußeren Ummantelungsschicht (20) direkt verbunden ist, so dass Zugkräfte über den Zugkopf (22.1) sowohl in das zentrale Metallrohr (12) als auch in die äußere Ummantelungsschicht (20) eingeleitet werden.

3. Fernwärmeleitungsabschnitt nach Anspruch 2, **dadurch gekennzeichnet, dass** der Zugkopf (22.1) mit dem zentralen Metallrohr (12) verschweißt ist und die Ummantelung des Zugkopfes aus faserverstärktem Kunststoff stoffschlüssig mit der äußeren Ummantelungsschicht (20) der Fernwärmeleitung (10) verbunden ist.

4. Fernwärmeleitungsabschnitt nach Anspruch 1, **dadurch gekennzeichnet, dass** die Kraftübertragungsstruktur (22) einen metallischen Schutzschild (22.2) umfasst, der sich radial zwischen dem zentralen Metallrohr (12) und der äußeren Ummantelungsschicht (20) erstreckt, wobei der metallische Schutzschild (22.2) an dem zentralen Metallrohr (12) befestigt und an der äußeren Mantelschicht (20) angebracht ist.

5. Fernwärmeleitungsabschnitt gemäß Anspruch 4, **dadurch gekennzeichnet, dass** Verstärkungsbleche (38) vorgesehen sind, die sich zwischen einer distalen Oberfläche des metallischen Schutzschildes (22.2) und einer Außenfläche des zentralen Metallrohrs (12) erstrecken und sowohl mit dem metallischen Schutzschild (22.2) als auch mit dem zentralen Metallrohr (12) verschweißt sind.

6. Fernwärmeleitungsabschnitt gemäß mindestens einem der Ansprüche 1 bis 5, **dadurch gekennzeichnet, dass** die Ummantelungsschicht (20) eine Schichtdicke von mindestens 5 mm, vorzugsweise mindestens 12 mm, aufweist.

7. Fernwärmeleitungsabschnitt gemäß mindestens einem der Ansprüche 1 bis 6, **dadurch gekennzeichnet, dass** das zentrale Metallrohr (12) einen Innendurchmesser zwischen 100 mm und 2000 mm aufweist.

8. Fernwärmeleitung (30), zusammengesetzt aus einer Vielzahl von Fernwärmeleitungsabschnitten, wobei jeder der Fernwärmeleitungsabschnitte (10.1, 10.2) umfasst
- ein zentrales Metallrohr (12) zum Leiten eines Wärmeübertragungsmediums,
- eine Wärmedämmschicht (16) aus einem Polymerschaum und
- eine Mantelschicht (18), die die Wärmedämmschicht vor mechanischer Beschädigung schützt
wobei die zentralen Metallrohre (12) an ihren Stirnseiten so miteinander verschweißt sind, dass die Schweißverbindung zwischen zwei zentralen Metallrohren (12) Zug- und Druckkräfte übertragen kann und gegenüber dem Wärmeträgermedium dicht ist,
**dadurch gekennzeichnet, dass** die Fernwärmeleitungsabschnitte (10.1, 10.2) eine äußere Ummantelungsschicht (20) aus faserverstärktem Kunststoff aufweisen, wobei die äußeren Ummantelungsschichten (20) miteinander verbundener Fernwärmeleitungsabschnitte (10) mittels glasfaserverstärktem Kunststoff so miteinander verbunden sind, dass Zugkräfte von einem Fernwärmeleitungsabschnitt (10.1) über die Verbindungsstelle der Ummantelungsschichten (20) auf den nächsten Fernwärmeleitungsabschnitt (10.2) übertragen werden können.

9. Fernwärmeleitung nach Anspruch 8, **dadurch gekennzeichnet, dass** die Außenmantelschichten (20) miteinander verbundener Fernwärmeleitungsabschnitte (10) mittels glasfaserverstärktem Kunststoff so miteinander verbunden sind, dass Zugkräfte von mindestens 5 MN (Mega-Newton) über die Verbindung der Ummantelungsschichten (20) von einem Fernwärmeleitungsabschnitt (10.1) auf den nächsten Fernwärmeleitungsabschnitt (10.2) übertragen werden können.

10. Fernwärmeleitung nach Anspruch 8 oder 9, **dadurch gekennzeichnet, dass** sie an einem Ende einen Fernwärmeleitungsabschnitt nach einem der Ansprüche 1 bis 7 umfasst.

11. Fernwärmeleitung gemäß mindestens einem der Ansprüche 8 bis 10, **dadurch gekennzeichnet, dass** die äußeren Ummantelungsschichten (20) der miteinander verbundenen Fernwärmeleitungsabschnitte (10) im Bereich der Verbindung jeweils über eine Länge zwischen 50 mm und 1000 mm schräg verbunden sind.

12. Verfahren zur grabenlosen Verlegung einer Fernwärmeleitung, wobei das Verfahren die folgenden Schritte umfasst:
- Bereitstellen eines ersten Fernwärmeleitungsabschnitts (10) gemäß mindestens einem der Ansprüche 1 bis 7, wobei der erste Fernwärmeleitungsabschnitt eine Kraftübertragungsstruktur (22) umfasst
- Bereitstellung weiterer Fernwärmeleitungsabschnitte (10.2, 10.n) ohne kraftübertragende Struktur,
- wobei jeder Fernwärmeleitungsabschnitt (10) ein zentrales Metallrohr (12), eine Wärmedämmschicht (16), eine Mantelschicht (18) und eine äußere Ummantelungsschicht (20) umfasst,
- Verbinden der Stirnseiten der zentralen Metallrohre (12) durch Schweißen,
- Wiederherstellung der Wärmedämmschicht (16),
- Wiederherstellung der Mantelschicht (18) und
- Verbinden der äußeren Ummantelungsschichten (20).

## Revendications

1. Tronçon (10) de tuyau de chauffage urbain, comprenant
- un tube (12) central métallique pour porter un milieu de transfert de la chaleur,
- une couche (16) d'isolation thermique en une mousse polymère ou en d'autres matériaux isolants, et
- une couche (18) d'enveloppe protégeant la couche d'isolation thermique d'un dommage mécanique,
le tronçon (10) de tuyau de chauffage urbain ayant une extrémité distale, qui est l'extrémité avant lorsque le tuyau de chauffage urbain est installé sans tranchée,
**caractérisé en ce que** le tronçon de tuyau de chauffage urbain a
- une couche (20) extérieure de gainage en une matière plastique renforcée par de la fibre de verre, et
- une structure (22) métallique de transmission de force, qui est fixée à l'extrémité distale du tube central métallique,
la structure (22) de transmission de force ayant un diamètre extérieur, qui correspond ou qui est supérieur à un diamètre extérieur de la couche (20) extérieure de gainage, et
la structure (22) de transmission de force étant conçue pour transférer des forces s'appliquant à l'extrémité distale du tronçon (10) de tuyau de chauffage urbain dans une direction longitudinale du tronçon (10) de tuyau de chauffage urbain au tube (12) central métallique et à la couche (20) extérieure de gainage, en évitant ainsi des forces de compression et de cisaillement sur la couche (16) d'isolation thermique, qui est disposée radialement entre le tube (12) central métallique et la couche (20) extérieure de gainage.

2. Tronçon de tuyau de chauffage urbain suivant la revendication 1, **caractérisé en ce que** la structure de transmission de force est une tête (22.1) de traction, qui consiste en acier et est gainée d'une matière plastique renforcée par de la fibre et est reliée directement à la fois au tube (12) central métallique et à la couche (20) extérieure de gainage, d'une façon telle, que des forces de traction sont appliquées par la tête (22.1) de traction à la fois au tube (12) central métallique et à la couche (20) extérieure de gainage.

3. Tronçon de tuyau de chauffage urbain suivant la revendication 2, **caractérisé en ce que** la tête (22.1) de traction est soudée au tube (12) central métallique et le gainage de la tête de traction en une matière plastique renforcée par de la fibre est reliée matériellement à la couche (20) extérieure de gainage du tuyau (10) de chauffage urbain.

4. Tronçon de tuyau de chauffage urbain suivant la revendication 1, **caractérisé en ce que** la structure (22) de transmission de force comprend un écran (22.2) métallique de protection s'étendant radialement entre le tube (12) central métallique et la couche (20) extérieure de gainage, l'écran (22.2) métallique de protection étant fixé au tube (12) central métallique et étant assujetti à la couche (20) extérieure de gainage.

5. Tronçon de tuyau de chauffage urbain suivant la revendication 4, **caractérisé en ce qu'**il est prévu des goussets (38), qui s'étendent entre une surface distale de l'écran (22.2) métallique de protection et une surface extérieure du tube (12) central métallique et qui sont soudés à la fois à l'écran (22.2) métallique de protection et au tube (12) central métallique.

6. Tronçon de tuyau de chauffage urbain suivant au moins l'une des revendications 1 à 5, **caractérisé en ce que** la couche (20) de gainage a une épaisseur de couche d'au moins 5 mm, de préférence d'au moins 12 mm.

7. Tronçon de tuyau de chauffage urbain suivant au moins l'une des revendications 1 à 6, **caractérisé en ce que** le tube (12) central métallique a un diamètre intérieur compris entre 100 mm et 2000 mm.

8. Tuyau (30) de chauffage urbain composé d'une pluralité de tronçons de tuyau de chauffage urbain, chacun des tronçons (10.1, 10.2) de tuyau de chauffage urbain, comprenant
- un tube (12) central métallique pour conduire un milieu de transfert de la chaleur,
- une couche (16) d'isolation thermique en une mousse polymère, et
- une couche (18) d'enveloppe protégeant la couche d'isolation thermique d'un dommage mécanique,
dans lequel les tubes (12) centraux métalliques sont soudés ensemble en leurs faces d'extrémité, d'une façon telle, que la jonction soudée entre deux tubes (12) centraux métalliques puisse transmettre des forces de tension et de compression et soit imperméable au milieu de transfert de la chaleur,
**caractérisé en ce que** les tronçons (10.1, 10.2) de tuyau de chauffage urbain ont une couche (20) extérieure de gainage en une matière plastique renforcée par de la fibre, les couches (20) extérieures de gainage de tronçons (10) reliés de tuyau de chauffage urbain étant reliées les unes aux autres, au moyen d'une matière plastique renforcée par de la fibre de verre, d'une façon telle, que des forces de traction puissent être transmises d'un tronçon (10.1) de tuyau de chauffage urbain au tronçon (10.2) de tuyau de chauffage suivant, par l'intermédiaire de la jonction des couches (20) de gainage.

9. Tuyau de chauffage urbain suivant la revendication 8, **caractérisé en ce que** les couches (20) extérieures de gainage de tronçons (10) reliés entre eux de tuyau de chauffage urbain sont reliées l'une à l'autre, au moyen de matière plastique renforcée par de la fibre de verre, d'une façon telle, que des forces de traction d'au moins 5 MN (méga-newton) puissent être transmises d'un tronçon (10.1) de tuyau de chauffage urbain au tronçon (10.2) de tuyau de chauffage suivant, par l'intermédiaire de la jonction des couches (20) de gainage.

10. Tuyau de chauffage urbain suivant la revendication 8 ou 9, **caractérisé en ce qu'**il comprend, à une extrémité, un tronçon de tuyau de chauffage urbain suivant l'une quelconque des revendications 1 à 7.

11. Tuyau de chauffage urbain suivant au moins l'une des revendications 8 à 10, **caractérisé en ce que** les couches (20) extérieures de gainage de tronçons (10) reliés entre eux de tuyau de chauffage urbain sont chacune jointes par flambage sur une longueur comprise entre
50 mm et 1000 mm dans la région de la liaison.

12. Procédé d'installation sans tranchée d'un tuyau de chauffage urbain, le procédé comprenant les stades de :
- se procurer un premier tronçon (10) de tuyau de chauffage urbain suivant au moins l'une des revendications 1 à 7, ledit premier tronçon de tuyau de chauffage urbain comprenant une structure (22) de transmission de force,
- se procurer d'autres tronçons (10.2, 10.n) de tuyau de chauffage urbain sans structure de transmission de force,
- chaque tronçon (10) de tuyau de chauffage urbain comprenant un tube (12) central métallique, une couche (16) d'isolation thermique, une couche (18) d'enveloppe et une couche (20) extérieure de gainage,
- joindre les faces des tubes (12) centraux métalliques par soudage,
- restaurer la couche (16) d'isolation thermique,
- restaurer la couche (18) d'enveloppe, et
- joindre les couches (20) extérieures de gainage.
